(19) **Europäisches Patentamt / European Patent Office / Office européen des brevets**

(11) **EP 1 976 296 A1**

(12) **EUROPEAN PATENT APPLICATION**
published in accordance with Art. 158(3) EPC

(43) Date of publication:
**01.10.2008 Bulletin 2008/40**

(21) Application number: **07707076.1**

(22) Date of filing: **19.01.2007**

(51) Int Cl.:
*H04N 7/18* (2006.01)    *B60R 1/00* (2006.01)
*G08G 1/16* (2006.01)    *H04N 5/225* (2006.01)

(86) International application number:
**PCT/JP2007/050788**

(87) International publication number:
**WO 2007/083741 (26.07.2007 Gazette 2007/30)**

(84) Designated Contracting States:
**DE FR SE**

(30) Priority: **20.01.2006 JP 2006013123**

(71) Applicant: **Sumitomo Electric Industries, Ltd.**
**Osaka-shi, Osaka 541-0041 (JP)**

(72) Inventor: **HARUNA, Tetsuya**
**Kanagawa 244-8588 (JP)**

(74) Representative: **HOFFMANN EITLE**
**Patent- und Rechtsanwälte**
**Arabellastrasse 4**
**81925 München (DE)**

(54) **INFRARED IMAGING SYSTEM**

(57)    The present invention relates to a long-life, low-power consumption infrared imaging system having a structure for realizing with a high reliability both the taking of an image of its surrounding environments and the detection of objects. The infrared imaging system comprises a light source section, an image pickup section, a processing section, and a monitor. For emitting SC light including a wavelength component in a near-infrared wavelength band as irradiation light, the light source section includes a seed light source emitting laser light, an optical fiber generating the SC light in response to the input of the laser light, and wavelength selecting means. The wavelength selecting means selectively limits the wavelength region of the irradiation light in accordance with imaging modes. In the mode for taking an image of a surrounding environment, the wavelength selecting means limits the irradiation light wavelength to a wavelength band excluding an absorption wavelength band of moisture and the like in the air. In the mode for detecting an object such as a frozen part on the road surface, on the other hand, the wavelength selecting means limits the irradiation light wavelength to an absorption wavelength band of water or ice.

**Fig.1**

## Description

## Technical Field

The present invention relates to an infrared imaging system utilizing supercontinuum light (SC light).

## Background Art

Infrared imaging systems have widely been in use in general as night-vision imaging apparatus for vehicles and nighttime security monitoring systems. Near-infrared LEDs and halogen lamps are used as light sources for such infrared imaging systems. When a halogen lamp is used, near-infrared light is extracted alone through a filter.

The following is a reason why near-infrared light is utilized in conventional infrared imaging systems such as those mentioned above. For example, fields of view are restricted when visible light is used in thick fog or in a downpour. By contrast, utilizing near-infrared light deviated from the absorption wavelength region of moisture enables clear imaging to relatively far places even under bad weathers such as those mentioned above.

The conventional infrared imaging systems are disclosed, for example, in Patent Documents 1 and 2.

Patent Document 1: Japanese Patent Application Laid-Open No. 2002-274258
Patent Document 2: Japanese Patent Application Laid-Open No. 2003-257367

## Disclosure of the Invention

## Problems that the Invention is to Solve

The inventors have studied the conventional infrared imaging systems in detail, and as a result, have found problems as follows. Namely, the near-infrared region includes many absorption wavelength bands of substances contained in the air, e.g., moisture, $CO_2$, and substances having C-H bonds. When an infrared imaging system takes an image of its surroundings, it will be preferred if the image is taken in a wavelength region excluding the absorption wavelength bands of these substances. In addition, if substances such as moisture can be detected, higher functions can be realized such that, for example, a night-vision imaging apparatus for a vehicle can also grasp road surface conditions such as freezing.

In the conventional infrared imaging system using a near-infrared LED, however, the light-emitting wavelength bandwidth is narrow, i.e., about 150 nm, which makes it necessary to use a number of LEDs having light-emitting wavelength regions different from each other in order to realize both the taking of an image of its surrounding environment and the detection of substances. This worsens the reliability of the system.

On the other hand, it is necessary for the conventional infrared imaging system using a halogen lamp to extract near-infrared light from a wide band ranging from the visible region to infrared region owned by the halogen lamp, whereby the power consumption required for a desirable output power increases. When terminal voltage is raised in order to increase output power, filaments may break or darken, thereby shortening their life.

The present invention is made to solve the aforementioned problem, and it is an object to provide a long-life, low-power consumption infrared imaging system having a structure for realizing with a high reliability both the taking of an image of its surrounding environments and the detection of objects (including substances).

## Means for Solving the Problems

For solving the above-mentioned problems, the infrared imaging system according to the present invention comprises, at least, a light source section, an image pickup section, wavelength selecting means, a display section, and a processing section. The light source section is a light-emitting unit for emitting supercontinuum light (SC light) including a wavelength in a near-infrared region as illumination light to a predetermined illumination area, and includes a seed light source for emitting laser light and an optical fiber for generating the SC light in response to the input of the laser light. The image pickup section captures light including a reflected component of irradiation light having arrived from the predetermined illumination area as light to be detected, and generates image data according to information about the captured light to be detected. The wavelength selecting means includes at least one of first wavelength selecting means for selectively limiting a wavelength region of the irradiation light and second wavelength selecting means for selectively limiting a wavelength region of the light to be detected entering the image pickup section. The display section displays the image data generated by the image pickup section. According to an intensity of the light to be detected in an absorption wavelength region of an object to be detected included in the image data, the processing section determines whether the object to be detected exists or not in the predetermined illumination region.

In the infrared imaging system having a structure such as the one mentioned above, the light source section emits the irradiation light based on the SC light. When laser light having a large peak power is incident on a nonlinear medium, its spectrum band is expanded by a nonlinear phenomenon occurring in the medium, thus yielding wideband light, which is the SC light. The SC light has a flat spectrum over a wide band where the wavelength is at least 0.8 $\mu$m but not more than 3 $\mu$m, for example. In the infrared imaging system, the first wavelength selecting means (or second wavelength selecting means) selectively limits the wavelength band of the irradiation light (or light to be detected). Therefore, when taking an image of a surrounding environment (predetermined illumination area), the spectrum of the irradiation light or light to be detected can selectively be limited to a wavelength band excluding absorption wavelength bands of object substances such as moisture, $CO_2$, and substances having C-H bonds, whereby a clear image can be obtained in the image pickup section. When detecting the object to be detected, on the other hand, the spectrum of the irradiation light or light to be detected can selectively be limited to an absorption wavelength band of an object substance such as moisture, so that the object substance can be detected with a favorable accuracy. Thus, this infrared imaging system can achieve with a high level both the taking of an image of its surrounding environments and the detection of object substances.

In the infrared imaging system, the light source section emits the SC light having a flat spectrum over a wide band as the irradiation light. Using such a light source section as a near-infrared light source makes it unnecessary to prepare a number of LEDs, whereby the reliability can be enhanced. Since a necessary wavelength bandwidth can easily be adjusted by regulating laser light conditions and the structure of the optical fiber, the power consumption can be saved as compared with that in a structure equipped with a halogen lamp. Further, even when the output power is raised, the filament does not break or darken as in a halogen lamp, whereby a long life can be realized.

Preferably, in the infrared imaging system according to the present invention, the optical fiber of the light source section includes a highly nonlinear optical fiber (HNLF: Highly Nonlinear Fiber). The HNLF is an optical fiber whose nonlinear coefficient $\gamma$ is 5 times or more that of a typical transmission optical fiber (SMF: single-mode fiber), and thus is likely to generate a nonlinear phenomenon. It will be sufficient if the nonlinear coefficient $\gamma$ of the HNLF is 7.5/W/km or more when measured by the XPM method, for example. The nonlinear coefficient $\gamma$ of the HNLF is preferably 10 times or more (15/W/km or more), more preferably 20 times or more (30/W/km or more), that of a typical transmission optical fiber. Unlike so-called hole-assisted PCF (Photonic Crystal Fiber), the HNLF can easily be designed such that a zero-dispersion wavelength where a four-wave mixing phenomenon or soliton effect contributing to generating SC light is likely to occur is located in the near-infrared region. Therefore, this infrared imaging system can efficiently generate the SC light in the near-infrared region.

Preferably, in the infrared imaging system according to the present invention, the spectrum band of the SC light falls within the range of at least 0.8 $\mu$m but not more than 3 $\mu$m. In this case, the taking of images in the near-infrared region and the detection of objects to be detected (including substances) can be performed favorably. The SC light having such a spectrum band can easily be generated by the above-mentioned HNLF, for example. Here, "included in the range of at least 0.8 $\mu$m but not more than 3 $\mu$m" means that the spectrum intensity of an SC light pulse at each of the wavelengths of 0.8 $\mu$m and 3 $\mu$m is 10% or less of the peak intensity, for example.

The infrared imaging system according to the present invention having a structure such as the one mentioned above may be mounted to a vehicle. In this case, even at nighttime, surroundings of the vehicle (surrounding environments) can clearly be viewed, while substances such as moisture existing on the road surface can favorably be detected. Therefore, this infrared imaging system can enhance the safety at the time when the vehicle moves. The infrared imaging system according to the present invention may further comprise a speed controller which controls the moving speed of the vehicle according to a result of determination in the processing section. For example, the speed controller controls the speed when the existence of the object to be detected (substance) is proved in the processing section. In this case, the safety at the time when the vehicle moves is further enhanced.

In the infrared imaging system according to the present invention, it is preferable that the processing section determines whether the object to be detected (substance) exists or not according to an optical intensity of at least one of light to be detected having a wavelength of 1.38 $\mu$m, light to be detected having a wavelength of 1.45 $\mu$m, light to be detected having a wavelength of 1.5 $\mu$m, light to be detected having a wavelength of 1.87 $\mu$m, light to be detected having a wavelength of 1.94 $\mu$m, light to be detected having a wavelength of 1.98 $\mu$m, and light to be detected having a wavelength of 2.0 $\mu$m. Among these wavelengths, 1.38 $\mu$m, 1.45 $\mu$m, 1.87 $\mu$m, 1.94 $\mu$m, and 2.0 $\mu$m are wavelengths easily absorbable by water, while 1.5 $\mu$m and 1.98 $\mu$m are wavelengths easily absorbable by ice. Therefore, this infrared imaging system can accurately grasp road surface conditions such as wetting and freezing, for example.

The infrared imaging system according to the present invention may further comprise an alarm generator which generates an alarm. This alarm generator issues an alarm when the existence of the object to be detected (substance) is proved in the processing section. In this case, a driver or the like can be informed of the existence of the object to be detected when the infrared imaging system is mounted to a vehicle, for example, whereby the safety can further be enhanced.

In the infrared imaging system according to the present invention, it is preferable that the image pickup section includes a light-receiving device containing an InP semiconductor layer and an InGaAs semiconductor layer. In particular, the light-receiving device has a structure in which an InGaAs photosensitive layer is provided on an InP substrate. In this case, the light to be detected having a long wavelength of 2.6 $\mu$m or more, for example, can favorably be detected, whereby the taking of an image over a wide band can favorably be realized. As a photosensitive layer material in the light-receiving device, any of Si, PbSe, InAs, PbS, and HgCdTe may be selected according to the detection wavelength. The substrate material is not limited to InP.

In the infrared imaging system according to the present invention, the wavelength selecting means includes at least one of a photonic crystal filter and a tunable filter.

The infrared imaging system according to the present invention may have a structure by which image data based on information about the light to be detected is turned into a color image (visualized). When verifying the existence of water as the object to be detected, for example, the processing section allocates different colors in the visible light region to pixels constituting the image data corresponding to illumination locations within the illumination area according to respective absorbances of the illumination locations with respect to an absorption wavelength peculiar to water (the wavelength band of 1.38 $\mu$m yielding an absorbance peak). The allocated colors in the visible light region may be red, yellow, blue, and the like or expressed by density levels (grayscales) in a monochromatic image. The display section displays the image data in the colors allocated by the processing section to the pixels constituting the image data, whereby the image data can be visualized by the information about the light to be detected.

The visualization of image data in the infrared imaging system according to the present invention is also possible on the road surface where water and ice coexist. For example, the processing section allocates different colors in the visible light region to pixels constituting the image data corresponding to respective illumination locations within the illumination area according to respective ratios between the absorbance with respect to a first absorption wavelength (the wavelength band of 1.38 $\mu$m yielding an absorbance peak of water) and the absorbance with respect to a second absorption wavelength (the wavelength band of 1.5 $\mu$m yielding an absorbance peak of ice) different from the first absorption wavelength in the same illumination locations. The allocated colors in the visible light region may also be red, yellow, blue, and the like or expressed by density levels (grayscales) in a monochromatic image in this case. The display section displays the image data in the colors allocated by the processing section to the pixels constituting the image data, whereby the component ratio of water and ice on the road surface can be visualized in a simulated fashion. This makes it possible to grasp road surface conditions and the like more clearly.

The infrared imaging system according to the present invention may have a structure for improving the SN ratio of the image data based on the light to be detected. For example, for improving the SN ratio of the image data generated by the image pickup section, the processing section produces correction image data (image to be used in analysis) having reduced a noise component from thus generated image data. Usually, in an environment where the infrared imaging system is placed, the SN ratio of the resulting image data is deteriorated by stray light (e.g., sunlight, streetlight, and the like), surrounding temperature, and surrounding environments (e.g., rain, fog, snow, and the like). Therefore, the SN ratio can be improved by utilizing a light-shielded image (including the device noise of the light-receiving device itself) obtained in the state where the light-receiving surface of the light-receiving device is shielded, an SC light image obtained by directly receiving the SC light by the light-receiving device, a nonirradiated image obtained in the state not irradiated with the SC light, and an illumination image (image data based on information about the light to be detected) obtained in the state irradiated with the SC light. By subtraction processing of these four kinds of images, the amount of absorption at a specific wavelength in the object to be detected (including the optical intensity information of the light to be detected in the absorption wavelength region of the object to be detected) can clearly be visualized in the state where influences of disturbances such as stray light, environmental temperature, and surrounding environment are eliminated.

The infrared imaging system according to the present invention may have a structure for correcting a vibration of the image data based on the light to be detected. For example, when the processing section averages a plurality of image data items successively captured as time passes for each of the pixels corresponding thereto (e.g., provides an average value of luminance in each of the pixels corresponding thereto as new luminance information), influences of image blurs such as vibration can effectively be reduced.

Further, the infrared imaging system according to the present invention may have one or more imaging units having a structure such as the one mentioned above and realizing the SC light irradiation function and detection function. For example, when the infrared imaging system is mounted to a vehicle and takes an image of road surface conditions and the like, a plurality of imaging units provided so as to emit the SC light toward a traveling direction of the vehicle can irradiate the road surface with the SC light uniformly in a wide area, whereby the road surface conditions can be monitored over a wide area. When the imaging units are placed on the side faces and rear side of the vehicle, road surface conditions and the like in the surroundings of the vehicle can be monitored at the same time.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

**Effects of the Invention**

The present invention can realize with a high reliability both the taking of an image of surrounding environments and the detection of objects (including substances), while achieving a low-power consumption, long-life structure.

**Brief Description of the Drawings**

Fig. 1 is a view for explaining an example of use of the infrared imaging system according to the present invention;
Fig. 2 is a block diagram showing the structure of an embodiment of the infrared imaging system according to the present invention;
Fig. 3 is a block diagram showing various structural examples of the light source section in the infrared imaging system shown in Fig. 2;
Fig. 4 is a diagram for explaining image processing (SN ratio improvement and vibration correction) in the processing section;
Fig. 5 is a diagram showing the structure of a pulse light source as a first structure of a seed light source;
Fig. 6 is a diagram showing the structure of a pulse light source as a second structure of the seed light source;
Fig. 7 is a diagram showing the structure of a pulse light source as a third structure of the seed light source;
Fig. 8 is an example of spectrum of SC light emitted from an optical fiber in the light source section;
Fig. 9 is a diagram for explaining color imaging in the infrared imaging system according to the present invention; and
Fig. 10 is a view for explaining another structure of the infrared imaging system according to the present invention.

**Description of the Reference Numerals**

1...infrared imaging system; 2...seed light source; 2a to 2c...pulse light source; 3...optical fiber; 5...image pickup section; 6...processing section; 7...monitor; 8...control section; 9...alarm generator; 10...speed controller; 11, 12...wavelength selecting means; 20... light source section; D1...two-dimensional image data; L1...irradiation light; L2...light to be detected; La...laser light; and Lb...SC light

**Best Modes for Carrying Out the Invention**

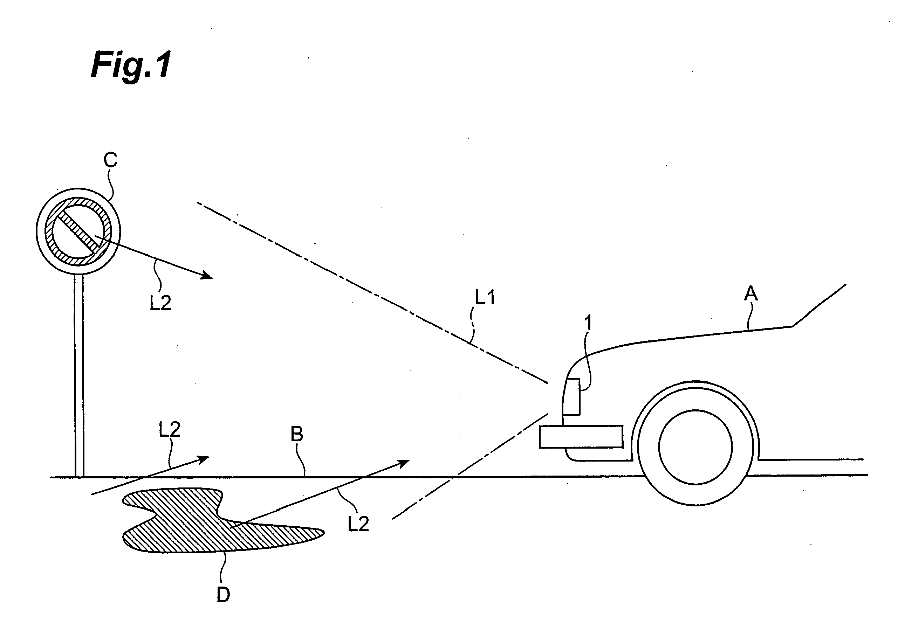

In the following, embodiments of the infrared imaging system according to the present invention will be explained in detail with reference to Figs. 1 to 10. In the explanation of the drawings, constituents identical to each other will be referred to with numerals identical to each other without repeating their overlapping descriptions.

Fig. 1 is a view for explaining an example of use of one embodiment of the infrared imaging system according to the present invention. This infrared imaging system 1 is mounted to a vehicle A, and emits irradiation light L1 in the near-infrared region in front of the vehicle A, while capturing light to be detected L2 reflected back from its surrounding substances (e.g., road surface B, sign C, and the like), thereby taking an image in front of the vehicle A in the near-infrared region. Thus captured image data is displayed on a monitor and plays an auxiliary role for the front viewing with typical white lamps. Also, the infrared imaging system 1 detects an optical intensity change in a specific wavelength component included in the light to be detected L2, thereby detecting predetermined substances (e.g., frozen part D existing on the road surface B and the like) and reporting it to the driver while controlling the speed of the vehicle A.

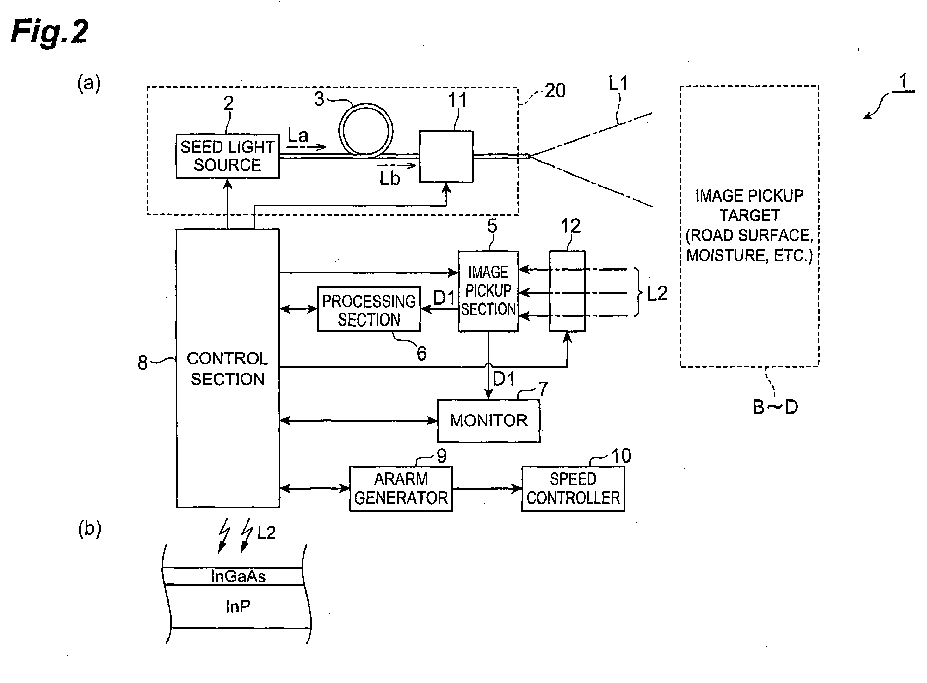

Fig. 2 is a block diagram showing the structure of an embodiment of the infrared imaging system according to the present invention. The infrared imaging system 1 shown in the area (a) of Fig. 2 comprises image pickup section 5, processing section 6, monitor 7, control section 8, alarm generator 9, speed controller 10, wavelength selecting means 12, and light source section 20.

The light source section 20 is a light-emitting unit for emitting the irradiation light L1 based on supercontinuum light (SC light) Lb in front of the vehicle A, for example. The light source section 20 comprises a seed light source 2, an optical fiber 3 whose entrance end is optically connected to the seed light source 2, and wavelength selecting means 11 optically connected to the exit end of the optical fiber 3.

The seed light source 2 receives power from a power supply apparatus which is not depicted, and emits laser light La. The laser light La may be any of pulsed laser light having a very short time width of several nanoseconds, for example, and continuous light. The internal structure of the seed light source 2 will be explained later in detail.

The optical fiber 3 inputs the laser light La and generates the SC light Lb including a component in the near-infrared region. The optical fiber 3 is a so-called highly nonlinear optical fiber (HNLF) of a type which is not hole-assisted, and is constituted by a core propagating light and a solid cladding. The core part of the optical fiber 3 is formed with a region having a refractive index different from the substantial refractive index of the cladding, while nonlinearity is enhanced by contriving the arrangement of this region. The optical fiber 3 expands the spectrum width of the laser light La twofold or more, for example, by a nonlinear optical effect (adiabatic soliton compression effect, Raman effect, self-phase modulation, four-wave mixing, or the like). This generates the SC light Lb having a smooth spectral form over a wide band.

Unlike the PCF (optical fiber whose nonlinearity and dispersion characteristic can be designed freely to a certain extent by forming a cavity in the cladding, whereby a high nonlinearity is realized by reducing the effective core area, for example), the HNLF can easily be designed such that a zero-dispersion wavelength falls within the range of at least 1.3 $\mu$m but not more than 1.8 $\mu$m. When the wavelength of the seed light source contributing to generating the SC light Lb is set near the zero-dispersion wavelength within this wavelength region, the SC light Lb becomes easier to occur. Namely, the SC light Lb can be generated on the longer wavelength side than in the case using the PCF. Preferably, the center wavelength of the laser light Lb is near the zero-dispersion wavelength of the optical fiber 3 or longer. When the zero-dispersion wavelength of the optical fiber 3 is at least 1.3 $\mu$m but not more than 1.8 $\mu$m, for example, it will be preferred if the center wavelength of the laser light La is also at least 1.3 $\mu$m but not more than 1.8 $\mu$m. This makes it possible to efficiently generate the SC light in a low-loss wavelength region of the optical fiber 3, while the SC light having a spectrum over the near-infrared region can favorably be generated.

The wavelength selecting means 11 is first wavelength selecting means provided for selectively limiting the wavelength region of the irradiation light L1. The wavelength selecting means 11, which is constituted by an optical element such as photonic crystal filter, tunable filter, monochrometer, or dispersing prism, inputs the SC light Lb emitted from the optical fiber 3 and emits the irradiation light whose wavelength region is selectively limited. The wavelength selecting means 11 is constructed such that the limited wavelength can be selected (changed) by the control section 8. Examples of tunable filters which can construct the wavelength selecting means 11 include interference filters, diffraction gratings, and acousto-optical devices (AOTF: Acousto Optical Tunable Filters).

When taking an image of the surroundings (front side) of the vehicle A by the infrared imaging system 1, the wavelength selecting means 11 selectively limits the spectrum of the irradiation light L1 to a wavelength band (e.g., 0.8 $\mu$m to 1.2 $\mu$m or 1.6 $\mu$m to 1.8 $\mu$m) excluding the absorption wavelength bands of components contained in the air such as moisture, $CO_2$, and substances having C-H bonds. This makes it possible to acquire clear image data in the image pickup section 5, which will be explained later, even under bad weathers. When detecting a substance to be detected such as ice in the frozen part D (Fig. 1), the spectrum of the irradiation light L1 is selectively limited to an absorption wavelength region of the substance to be detected: When the substance to be detected is moisture (OH group), for example, the spectrum of the irradiation light L1 is selectively limited to at least one wavelength band of 1.38-$\mu$m band, 1.45-$\mu$m band, 1.87-$\mu$m band, 1.94-$\mu$m band, and 2.0-$\mu$m band. When the substance to be detected is ice, on the other hand, the spectrum of the irradiation light L1 is selectively limited to at least one wavelength band of 1.5-$\mu$m band and 1.98-$\mu$m band. This makes it possible to generate image data in which the substance to be detected is emphasized in the image pickup section 5 to be explained later, whereby whether or not the substance to be detected exists within the illumination area can accurately be determined.

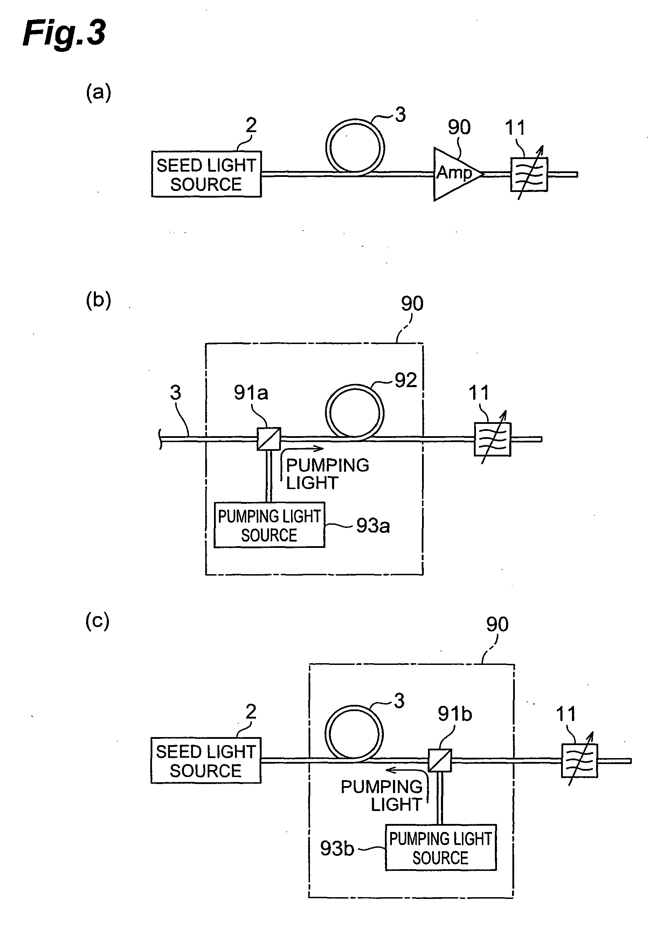

The light source section 20 may have optical amplification means which inputs pumping light having a wavelength different from that of the laser light La and amplifies the SC light Lb. Fig. 3 is a block diagram showing various structural examples of the light source section in the infrared imaging system 1 shown in the area (a) of Fig. 2. It will be sufficient if optical amplification means 90 (Amp) is arranged between the optical fiber 3 and wavelength selecting means 11. Such optical amplification means 90 is realized by any of a structure (first structure) in which an amplification optical fiber 92 doped with a rare-earth element (Er, Y, Bi, Tm, or the like) is arranged behind the optical fiber 3, a structure (second structure) in which a Raman amplification optical fiber is arranged behind the optical fiber 3, a structure (third structure) in which the optical fiber 3 itself becomes a Raman amplification optical fiber (i.e., the optical fiber 3 also acts as optical amplification means), a structure (fourth structure) in which an optical fiber for optical parametric amplification (OPA) is optically coupled behind the optical fiber 3, and a structure (fifth structure) in which the optical fiber 3 itself becomes an OPA optical fiber (i.e., the optical fiber 3 also acts as optical amplification means). The optical connection or optical coupling between optical members is realized by any of fusion, connection by an optical connector, V-groove contact, or the like, and spatial coupling.

In the first structure, as shown in the area (b) of Fig. 3, a rare-earth-doped optical fiber is arranged as the amplification optical fiber 92 behind the optical fiber 3. Pumping light from a pumping light source 93 a is supplied to the upstream side (forward pumping) or downstream side (backward pumping) of the rare-earth-doped optical fiber through an optical coupler 91a. This favorably amplifies the SC light Lb. In the first structure, the wavelength range of the spectrum of the SC light Lb is limited to the amplification band of the rare-earth-doped optical fiber.

The second structure is similar to the structure shown in the area (b) of Fig. 3. Namely, a Raman amplification optical fiber (an HNLF different from the optical fiber 3 or the like) is arranged as the amplification optical fiber 92 behind the optical fiber 3. Pumping light from the pumping light source 93a is supplied to the upstream side (forward pumping) or downstream side (backward pumping) of the Raman amplification optical fiber through the optical coupler 91 a. This favorably amplifies the SC light Lb.

The third structure is suitable for the case where the optical fiber 3 is long (e.g., several hundreds of meters or more). Namely, as shown in the area (c) of Fig. 3, pumping light from a pumping light source 93b is supplied to the upstream side (forward pumping) or downstream side (backward pumping) of the optical fiber 3, which is the HNLF, through an optical coupler 91b. As a consequence, the SC light Lb is favorably amplified by induced Raman scattering in the optical fiber 3 itself.

In the above-mentioned third and third structures, the wavelength range of the spectrum of the SC light Lb is centered at a frequency lower by about 13 THz than the frequency of the pumping light. The SC light Lb having a spectrum bandwidth of 100 nm or more can also be amplified by using a plurality of wavelengths of pumping light.

In the fourth structure, an OPA optical fiber (an HNLF different from the optical fiber 3 or the like) is arranged behind the optical fiber 3. Pumping light is supplied to the upstream side (forward pumping) or downstream side (backward pumping) of the OPA optical fiber through an optical coupler. This favorably amplifies the SC light Lb. The fourth structure can also be realized by the structure shown in the area (a) of Fig. 3.

The fifth structure is suitable for the case where the optical fiber 3 is long (e.g., several tens of meters or more). Namely, pumping light is supplied to the upstream side (forward pumping) or downstream side (backward pumping) of the optical fiber 3, which is the HNLF, through an optical coupler, whereby the SC light Lb is favorably amplified by an optical parametric effect in the optical fiber 3 itself. The fifth structure can also be realized by the structure shown in the area (c) of Fig. 3.

In the above-mentioned fourth and fifth structures, the SC light Lb is amplified under a structure in which respective phases of pumping light, signal light, and idler light match each other. These structures can favorably amplify the SC light Lb having a wide bandwidth of several hundreds of nm as well.

Optical amplification by using optical amplification means having a structure such as those mentioned above amplifies the intensity of the SC light Lb by several to several tens of dB. In addition, using a saturation phenomenon of optical amplification stabilizes the intensity of amplified light even when the intensity fluctuates more or less in the incident light. Namely, even when the wavelength dependency or temporal fluctuation of the intensity of the SC light Lb is large before amplification, the intensity fluctuation in the SC light Lb after the optical amplification can be stabilized.

The wavelength selecting means 12 is second wavelength selecting means which is provided for selectively limiting the wavelength region of the light to be detected L2. As with the above-mentioned wavelength selecting means 11, the wavelength selecting means 12 is constituted by an optical element such as photonic crystal filter, tunable filter, monochrometer, or dispersing prism, for example. As light to be detected L2, the wavelength selecting means 12 receives light including reflected light from the object to be detected or substances (road surface B, sign C, and frozen part D shown in Fig. 1 and the like) in front of the vehicle upon irradiation with the irradiation light L1. The wavelength selecting means 12 is optically coupled to the light-receiving surface of the image pickup section 5, whereby the light to be detected L2 is made incident on the image pickup section 5 after its wavelength region is selectively limited in the wavelength selecting means 12. The wavelength selecting means 12 is constructed such that the limiting wavelength can be selected (changed) by the control section 8. Examples of tunable filters which can construct the wavelength selecting means 12 include interference filters, diffraction gratings, and AOTF.

When taking an image of the surroundings (front side) of the vehicle A by the infrared imaging system 1, the wavelength selecting means 12 selectively limits the spectrum of the light to be detected L2 to a wavelength band excluding the absorption wavelength bands of moisture, $CO_2$, substances having C-H bonds, and the like. This makes it possible to acquire clear image data in the image pickup section 5, which will be explained later, even under bad weathers. When detecting a substance to be detected such as ice in the frozen part D (Fig. 1), the spectrum of the light to be detected L2 is selectively limited to an absorption wavelength region of the substance to be detected. This makes it possible to generate image data in which the substance to be detected is emphasized in the image pickup section 5 to be explained later, whereby whether or not the substance to be detected exists within the illumination area can accurately be determined.

The above-mentioned infrared imaging system 1 comprises two wavelength selecting means 11, 12. However, the infrared imaging system 1 may be provided with one of the wavelength selecting means 11, 12 alone. The wavelength band of the irradiation light L1 can also be selectively limited by changing the wavelength of the laser light La from the seed light source 2. Namely, the seed light source 2 may be provided with wavelength selecting means such as diffraction grating or acousto-optical device, such that the wavelength of the laser light La is changed according to an instruction from the control section 8. In this case, the wavelength selecting means such as diffraction grating or acousto-optical device provided with the seed light source 2 acts as the first wavelength selecting means for selectively limiting the wavelength region of the irradiation light L1, whereby the wavelength selecting means 11, 12 can be omitted.

The image pickup section 5 is a constituent for taking an image of the light to be detected L2 from the surroundings by reflection of the irradiation light L1. The image pickup section 5 is an infrared camera constituted by a light-receiving device array, focal plane sensor, or the like including an InP semiconductor layer and an In-GaAs semiconductor layer, for example, and converts the light to be detected L2 transmitted through the wavelength selecting means 12 to electric two-dimensional image data D1. As shown in the area (b) of Fig. 2, a light-receiving device constituting a part of the image pickup section 5 has a structure in which an InGaAs photosensitive layer is provided on an InP substrate. In this case, light to be detected having a long wavelength of 2.6 $\mu$m or more, for example, can favorably be detected, whereby the taking of an image over a wide band can favorably be realized. As a photosensitive layer material, any of Si, PbSe, InAs, PbS, and HgCdTe may be selected according to the detection wavelength. The substrate material is not limited to InP.

In accordance with the two-dimensional image data D1 captured by the image pickup section 5, the processing section 6 calculates an optical intensity change in the light to be detected L2 in an absorption wavelength region of a substance to be detected (frozen part D in Fig. 1 or the like), thereby determining whether the substance to be detected exists or not. In particular, the processing section 6 stores reference data concerning road surface conditions (data concerning a dry road surface) beforehand, acquires the two-dimensional image data D1 from the image pickup section 5 according to an instruction from the control section 8, and compares the two-dimensional image data D1 with the reference data (by subtraction or the like), thereby determining whether the frozen part D (Fig. 1) exists or not.

The monitor 7 is a display section for displaying the two-dimensional image data D1 captured by the image pickup section 5. The monitor 7, which is under the control of the control section 8, displays the front view of the vehicle A according to the two-dimensional image data D1 when taking an image of the surroundings (front side) of the vehicle A by the infrared imaging system 1. When detecting a substance to be detected such as ice in the frozen part D (Fig. 1), the monitor 7 displays the region where the substance to be detected exists by blinking or a color different from that of other regions, for example.

When the existence of the substance to be detected is proved in the processing section 6, the alarm generator 9 generates an alarm. When the processing section 6 detects a substance to be detected such as the frozen part D (Fig. 1), the alarm generator 9, which is under the control of the control section 8, informs the driver of the existence of the frozen part D by an alarm sound or the like. When the existence of the substance to be detected is proved in the processing section 6, the speed controller 10 regulates the moving speed of the vehicle A so as to slow it down. The speed controller 10 operates in synchronization with the alarm generator 9. The alarm generator 9 and speed controller 10 improve the safety in vehicle traveling when the field of view is narrowed by rain, fog, snow, and the like or at low temperatures such as those below freezing point.

As mentioned above, the control section 8 controls individual constituents in the infrared imaging system 1. The control section 8 switches between a mode for taking an image of the surroundings (front side) of the vehicle A and a mode for detecting a substance to be detected in response to an operation by an operator (driver), and controls the constituents according to these modes. The control section 8 is favorably realized by having an arithmetic section such as CPU and a storage section such as memory, for example. The control section 8 may have the above-mentioned function of the processing section 6 (the control section 8 and processing section 6 may be realized by a single computer).

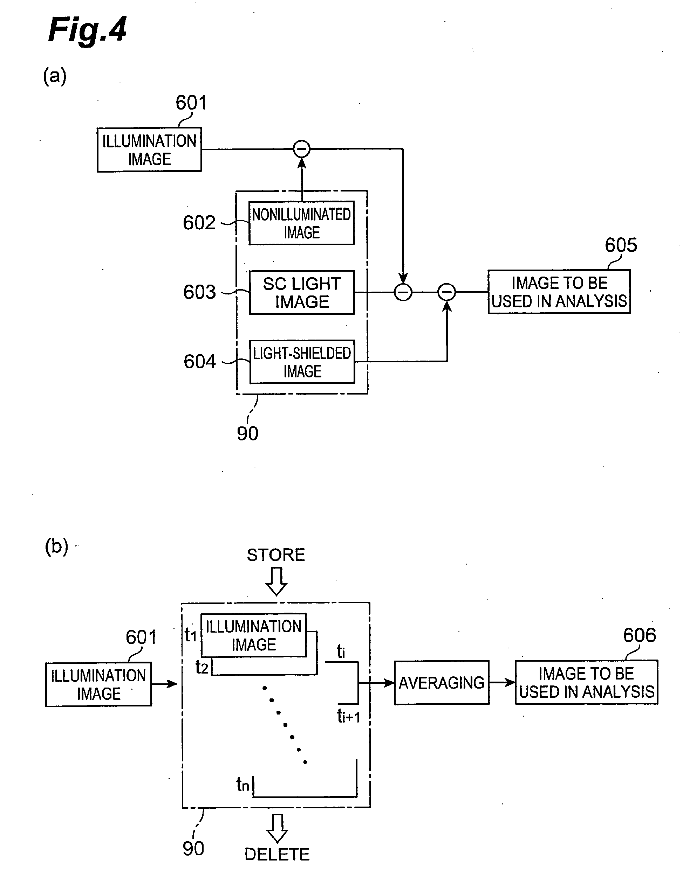

The infrared imaging system 1 may have a structure for improving the SN ratio of the image data based on the light to be detected L2. Namely, for improving the SN ratio of the image data generated by the image pickup section 5, the processing section 6 generates correction image data having reduced the noise component from thus generated image data. Usually, in an environment where the infrared imaging system 1 is placed, the SN ratio of the resulting image data is deteriorated by stray light (e.g., sunlight, streetlight, and the like), surrounding temperature, and surrounding environments (e.g., rain, fog, snow, and the like). Therefore, the SN ratio can be improved by utilizing a light-shielded image $V_N$ (device noise of the light-receiving device itself) obtained in the state where the light-receiving surface of the light-receiving device is shielded, an SC light image $V_{SC}$ obtained by directly receiving the SC light by the light-receiving device, a nonirradiated image $V_{BK}$ obtained in the state not irradiated with the SC light, and an illumination image $V_{IL}$ (image data based on information about the light to be detected) obtained in the state irradiated with the SC light, for example. The area (a) of Fig. 4 is a diagram for explaining image processing (SN ratio improvement) in the processing section 6, whereas the respective components of light-shielded image $V_N$ 604, SC light image $V_{SC}$ 603, nonirradiated image $V_{BK}$ 602, and illumination image $V_{IL}$ 601 are given as follows:

light-shielded image $V_N$: N
SC light image $V_{SC}$: $P_{SC}$ + N
nonirradiated image $V_{BK}$: $(P_N - A_N)$ + N
illumination image $V_{IL}$: $(P_{SC} - A_{SC})$ + $(P_N - A_N)$ + N

Here, the component of light-shielded image $V_N$ is given by the device noise N of the light-receiving device itself. The component of SC light image $V_{SC}$ is a value in which the SC light power $P_{SC}$ emitted to the light-receiving device is detected together with the device noise N. The component of nonirradiated image $V_{BK}$ is a value in which the stray light power $P_N$ in the state lowered by the absorption component $A_N$ absorbed by the object to be detected is detected together with the device noise N. The component of illumination image $V_{IL}$ is a value in which the reflection component of SC light lowered by the absorption component $A_{SC}$ absorbed by the object to be detected ($P_{SC} - A_{SC}$) and the stray light component lowered by the absorption component $A_N$ ($P_N - A_N$) are detected together with the device noise N. The light-shielded image $V_N$ 604, SC light image $V_{SC}$ 603, and nonirradiated image $V_{BK}$ 602 may be acquired before infrared imaging and stored therebefore in a memory 90 of the processing section (or memory within the control section 8).

Here, the difference ($V_{IL} - V_{BK}$) between the illumination image $V_{IL}$ and nonirradiated image $V_{BK}$ is taken, whereby the component value given by the following expression (1) is obtained.

$$V_{IL} - V_{BK} = P_{SC} - A_{SC} \qquad (1)$$

Further, for eliminating the irradiation power $P_{SC}$ of SC light, the difference between the SC light image $V_{SC}$ and the component value obtained by expression (1) is taken.

$$V_{SC} - (V_{IL} - V_{BK}) = A_{SC} + N \qquad (2)$$

The component value obtained by this expression (2) includes not only the absorption component $A_{SC}$ of SC light absorbed by the object to be detected, but also the device noise N. Therefore, further taking the difference between the component value obtained by expression (2) and the component value N of the light-shielded image $V_N$ yields an image 605 to be used in analysis including information about only the absorption component $A_{SC}$ of SC light in the object to be detected.

Thus, subtraction processing of these four kinds of images can clearly visualize the amount of absorption (including optical intensity information of the light to be detected in an absorption wavelength region of the object to be detected) at a specific wavelength in the object to be detected in the state where influences of disturbances such as stray light, environmental temperature, and surrounding environment are eliminated.

As a method of eliminating influences of stray light such as sunlight or scattered light, at the time of receiving the reflection component of SC light (irradiation light) from the object to be detected (e.g., road surface), only the light in synchronization with the irradiation light may be received according to the optical path length by which the irradiation light and its reflection component propagate. This case is also effective in reducing the noise in the image data generated in the image pickup section 5.

A part of the SC light generated as the irradiation light may be branched off by an optical coupler or the like, such that this part of SC light is utilized for monitoring the state of disturbance in the environment where the infrared imaging system 1 is placed. For example, the branched part of the SC light is emitted as monitor light into the air, and thus emitted monitor light is received by a light-receiving device such as PD, so as to determine the absorption intensity of the monitor light. The absorption intensity of the monitor light can be utilized for estimating the noise component in the light-receiving intensity at the time of actual detection, whereby more accurate information about the object to be detected (e.g., road surface conditions and the like) can be obtained. By utilizing at least one of light to be detected having a wavelength of 1.38 μm, light to be detected having a wavelength of 1.45 μm, light to be detected having a wavelength of 1.5 μm, light to be detected having a wavelength of 1.87 μm, light to be detected having a wavelength of 1.94 μm, light to be detected having a wavelength of 1.98 μm, and light to be detected having a wavelength of 2.0 μm, moisture in the air or ice can specifically be monitored. Such monitor light may be generated by a light source different from the light source for generating SC light without utilizing a part of the SC light.

The infrared imaging system 1 may have a structure for correcting a vibration of the image data based on the light to be detected. For example, when the processing section 6 averages a plurality of image data items successively captured as time passes for each of the pixels corresponding thereto (e.g., provides an average value of luminance in each of the pixels corresponding thereto as new luminance information), influences of image blurs such as vibration can effectively be reduced. The area (b) of Fig. 4 is a diagram for explaining image processing (vibration correction) in the processing section 6.

Namely, as shown in the area (b) of Fig. 4, the processing section 6 successively captures the illumination images 601 into the memory 90 (or memory within the control section 8) along with the passing of times $t_1$, $t_2$, ..., $t_n$. Among thus captured illumination images, the illumination image at time $t_i$ and the illumination image at time $t_{i+1}$ are subjected to averaging, whereby an image 606 to be used in analysis having corrected blurs within the image is obtained. Since the storage capacity of the memory 90 is limited, the used illumination images are sequentially deleted. When the vibration is large, the influence of vibration can further be reduced by increasing the number (number of frames of) the illumination images utilized for averaging. When the vibration is small, by contrast, the number (number of frames of) the illumination images utilized for averaging may be reduced.

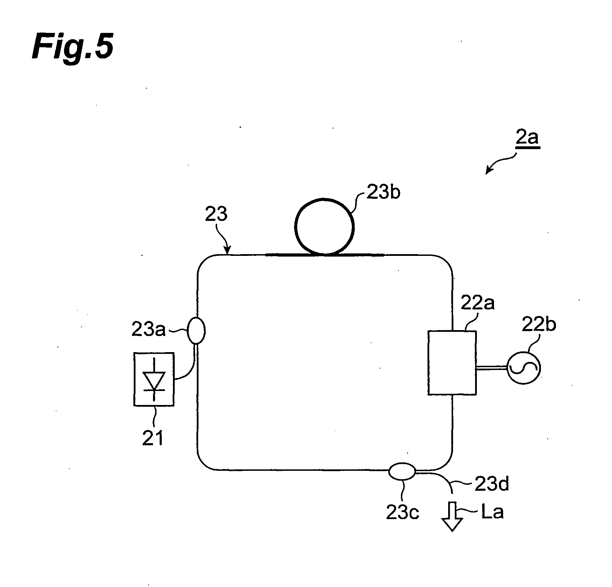

A detailed structure of the seed light source 2 will now be explained. Fig. 5 is a view showing the structure of a pulse light source 2a as a first structure of the seed light source 2. The pulse light source 2a is a so-called active mode synchronization type ultrashort pulsed light generating source, and is constituted by a ring type resonator. Namely, the pulse light source 2a comprises a semiconductor laser device 21, an LN modulator 22a, a signal generator 22b for driving the LN modulator 22a, and a ring-like cavity (optical waveguide) 23. The semiconductor laser device 21 is optically coupled to the ring-like portion of the cavity 23 through a coupler 23a. The ring-like portion of the cavity 23 is optically coupled to an output optical waveguide 23d through a coupler 23c. An erbium-doped optical fiber (EDF) 23b and the LN modulator 22a are optically connected in series to the ring-like portion of the cavity 23.

When an electric pulse signal at a predetermined frequency is sent from the signal generator 22b to the LN modulator 22a, the optical loss in the LN modulator 22a decreases by a period corresponding to the frequency. Pumping light is supplied to the ring-like portion of the cavity 23 from the semiconductor laser device 21. If the LN modulator 22a is controlled such that an oscillation occurs at the time when phases of modes included in light within the EDF 23b pumped by the pumping light are in synchronization with each other, ultrashort pulsed laser light having a pulse width of several femtoseconds will be generated and periodically emitted from the output optical waveguide 23d to the outside. The infrared imaging system 1 shown in Fig. 1 utilizes this periodic ultrashort pulsed light as laser light La. Here, the repetition frequency of the laser light La equals the frequency of the electric pulse signal sent from the signal generator 22a to the LN modulator 22a.

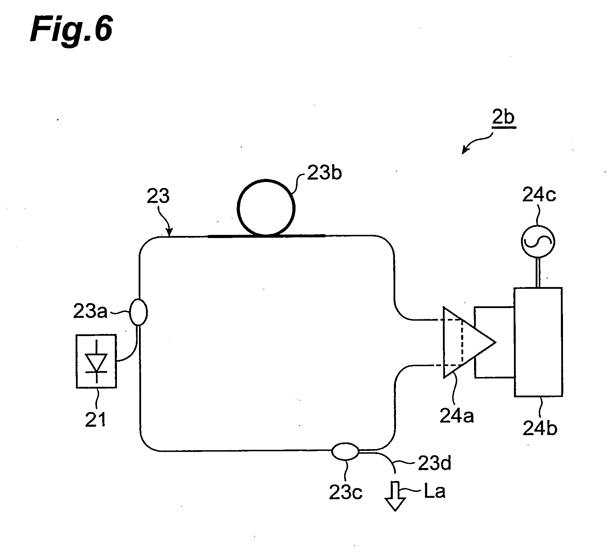

Fig. 6 is a diagram showing the structure of a pulse light source 2b as a second structure of the seed light source 2. The pulse light source 2b is a so-called passive mode synchronization type ultrashort pulsed light generating source, and is constituted by a ring type resonator. Namely, the pulse light source 2b comprises a semiconductor laser device 21, a ring-like cavity (optical waveguide) 23, a reflecting mirror 24a, a piezo motor 24b attached to the reflecting mirror 24a, and a signal generator 24c for driving the piezo motor 24b. As in the above-mentioned pulse light source 2a (the area (a) of Fig. 2), the semiconductor laser device 21 is optically coupled to the cavity 23, the cavity 23 has the output optical waveguide 23d, and the EDF 23b is optically coupled to the ring-like portion of the cavity 23.

In the pulse light source 2b, the reflecting mirror 24a is provided in place of the LN modulator 22a in the pulse light source 2a. The reflecting mirror 24a constitutes a part of the ring-like portion of the cavity 23, so that the length of the ring-like portion of the cavity 23 periodically changes when the position of the reflecting mirror 24a vibrates. The vibration of the reflecting mirror 24a is provided by the piezo motor 24b. Its vibration frequency is controlled by the signal generator 24c that drives the piezo motor 24b.

When an electric pulse signal at a predetermined frequency is sent from the signal generator 24c to the piezo motor 24b, the length of the cavity 23 fluctuates by a period corresponding to this frequency. Pumping light is supplied to the ring-like portion of the cavity 23 from the semiconductor laser device 21. At the instant when the length of the cavity 23 satisfies a soliton condition, an ultrashort pulsed laser light having a pulse width of about several femtoseconds is generated. This ultrashort pulsed laser light is periodically emitted as laser light La from the output optical waveguide 23d to the outside of the pulse light source 2b. Here, the repetition frequency of the laser light La equals the frequency of the electric pulse signal sent from the signal generator 24c to the piezo motor 24b. Since the periodic ultrashort pulsed light is generated by mechanically driving the reflecting mirror 24a, the repetition frequency of the laser light La tends to become smaller in the pulse light source 2b than in the pulse light source 2a having a structure in which the LN modulator 22a is driven electrically.

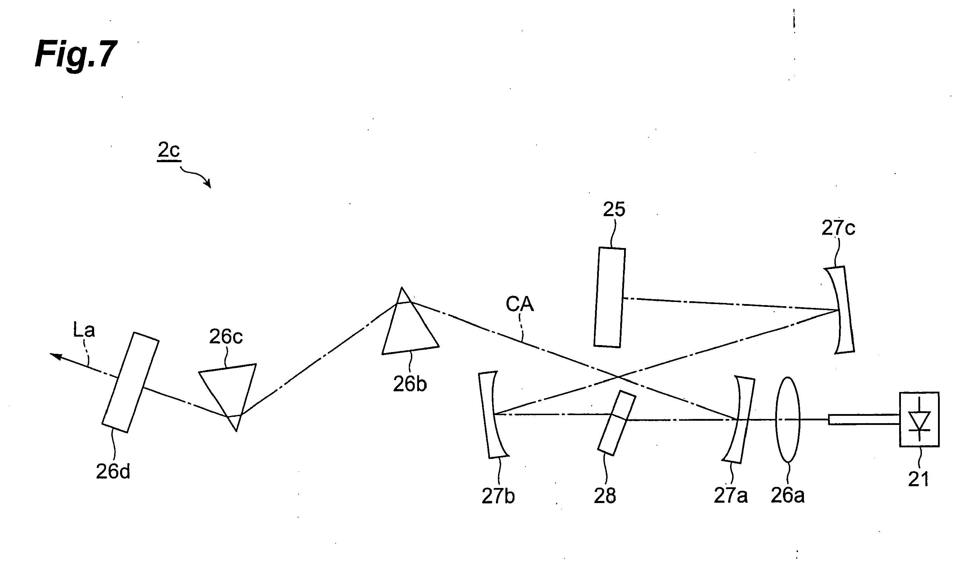

Fig. 7 is a diagram showing the structure of a pulse light source 2c as a third structure of the seed light source 2. The pulse light source 2c is a so-called passive mode synchronization type ultrashort pulsed light generating source, and is constituted by a solid-state laser made of Er:Yb-codoped glass. Namely, the pulse light source 2c has a semiconductor laser device 21, a saturable absorber mirror 25 in which a saturable absorber and a reflecting mirror are integrally constructed, a collimator lens 26a, prisms 26b and 26c, an output coupler 26d, mirrors 27a to 27c, and an Er:Yb-codoped glass sheet 28. Among them, the constituents other than the semiconductor laser device 21 and collimator lens 26a constitute a cavity CA for laser oscillation.

The pumping light emitted from the semiconductor laser device 21 reaches the Er:Yb-codoped glass sheet 28 through the collimator lens 26a and mirror 27a, thereby pumping the Er:Yb-codoped glass sheet 28. The Er:Yb-codoped glass sheet 28 is arranged on the cavity CA constituted by the saturable absorber mirror 25, prisms 26b and 26c, output coupler 26d, and mirrors 27a to 27c. The light advancing through the cavity CA reciprocates between the saturable absorber mirror 25 and output coupler 26d while being amplified by the Er:Yb-codoped glass sheet 28.

The saturable absorber mirror 25 has such a property as to absorb weak light but reflect strong light. Since the intensity of light becomes a maximum when phases of modes included in the light having reached the saturable absorber mirror 25 are in synchronization with each other, the saturable absorber mirror 25 functions as a reflecting mirror only at this instant, thereby generating laser oscillation. Therefore, this laser light becomes ultrashort pulsed light having a pulse width of about several femtoseconds, and is emitted as the laser light La from the output coupler 26d to the outside. Here, the repetition frequency of the laser light La becomes a value corresponding to the length of the cavity CA.

Operations of the infrared imaging system 1 having the foregoing structure will now be explained. The seed light source having any of the structures of the pulse light sources 2a to 2c with the first to third structures shown in Figs. 5 to 7 emits the pulsed laser light La to the optical fiber 3. This laser light La is constructed by ultrashort pulsed light components each having a pulse width of about several femtoseconds which are arranged periodically in a row. The spectrum bandwidth of the laser light La is expanded twofold or more by a nonlinear optical effect (adiabatic soliton compression effect or the like) in the optical fiber 3, whereby the SC light Lb having a smooth spectral form over a wide band is generated.

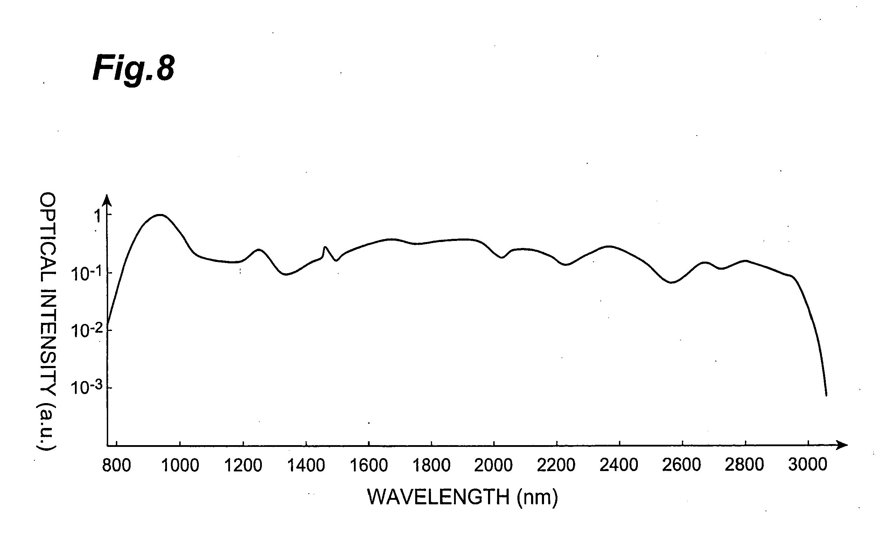

Fig. 8 shows an example of spectrum of the SC light Lb emitted from the optical fiber 3 (the area (a) of Fig. 2) in the light source section 20. The spectrum shown in Fig. 8 is a spectrum whose spectrum band is at least 0.8 $\mu$m but not more than 3 $\mu$m, while the value of spectrum intensity on the ordinate is normalized with its peak value taken as 1. The seed light source 2 and optical fiber 3 in the infrared imaging system 1 according to the present invention generates the SC light Lb having a flat spectrum over a wide band whose wavelength is at least 0.8 $\mu$m but not more than 3 $\mu$m as shown in Fig. 8, for example. The SC light Lb is emitted as the irradiation light L1 from the light exit end of the light source section 20 to the outside (in front of the vehicle) after its wavelength band is limited by the wavelength selecting means 11.

In the case where the mode for taking an image of the surroundings (front side) of the vehicle A is selected here, the control section 8 controls the wavelength selecting means 11 such that the spectrum of the irradiation light L1 is limited to a wavelength band excluding absorption wavelength bands of gases ($H_2O$, $CO_2$, substances having C-H bonds, and the like) present in the air. Then, reflected light (light to be detected L2) from image pickup targets such as the road surface B, sign C, and the like is captured in the image pickup section 5 through the wavelength selecting means 12. In this wavelength selecting means 12, the spectrum of the light to be detected L2 is limited to a wavelength band excluding the absorption wavelength bands of gases present in the air. The two-dimensional image data D1 generated in the image pickup section 5 is displayed in the monitor 7.

In the case where the mode for detecting a substance to be detected is selected, the control section 8 controls the wavelength selecting means 11 such that the spectrum of the irradiation light L1 is limited to an absorption wavelength band of the substance to be measured (water, ice, or the like). Then, reflected light (light to be detected L2) from the substance to be measured such as ice in the frozen part D is received in the image pickup section 5 through the wavelength selecting means 12. In this wavelength selecting means 12, the spectrum of the light to be detected L2 is limited to the absorption wavelength of the substance to be measured. Then, the two-dimensional image data D1 generated in the image pickup section 5 is sent to the processing section 6.

When the difference between the optical intensity of the light to be detected L2 based on the two-dimensional image data D1 and the reference data exceeds a specified value, the processing section 6 determines that the substance to be measured exists, and the result of determination is sent to the control section 8. The processing section 6 may perform the image processing for improving the SN ratio and vibration correction such as those mentioned above before the determination. The control section 8 causes the alarm generator 8 to issue an alarm such as alarm sound, and the speed controller 10 to regulate the moving speed of the vehicle A so as to slow it down.

Effects of the infrared imaging system according to the present invention will now be explained. In the infrared imaging system 1, the light source section 20 emits the irradiation light L1 by utilizing the generated SC light Lb. Also, in the infrared imaging system 1, the wavelength selecting means 11 (wavelength selecting means 12) selectively limits the wavelength band of the irradiation light L1 (light to be detected L2). Therefore, when taking an image of the surroundings (front side) of the vehicle A, the spectrum of the irradiation light L1 (light to be detected L2) can selectively be limited to a wavelength band excluding absorption wavelength bands of moisture, $CO_2$, substances having C-H bonds, and the like. Therefore, clear two-dimensional image data D1 can be acquired in the image pickup section 5. When detecting a substance to be detected such as ice in the frozen part D on the road surface B, on the other hand, the spectrum of the irradiation light L1 (light to be detected L2) can selectively be limited to an absorption wavelength band of the substance to be detected. Therefore, two-dimensional image data D1 in which the substance to be detected is emphasized is obtained, whereby the substance to be detected can be detected with a favorable accuracy. Thus, the infrared imaging system 1 can achieve with a high level both the taking of an image of its surrounding environments and the detection of substances to be detected.

In the infrared imaging system 1, the light source section 20 emits the irradiation light L1 by utilizing the SC light Lb having a flat spectrum over a wide band. Using such a light source section 20 as a near-infrared light source can enhance the reliability without needing a number of LEDs to be provided. Since a necessary wavelength bandwidth can easily be obtained by adjusting conditions of laser light La and structures (parameters) of the optical fiber 3, the power consumption can be suppressed as compared with that in a structure equipped with a halogen lamp. Even when the output power is raised, the filament does not break or darken as in a halogen lamp, whereby a long life can be realized.

As mentioned above, it will be preferred if the infrared imaging system is mounted to the vehicle A. This makes it possible to clearly view the sign C and the like in the surroundings even at nighttime, and favorably detect road surface conditions such as the frozen part D, wetting, water films, and snow cover, whereby the safety during moving can be enhanced.

Preferably, the processing section 6 determines whether the substance to be detected exists or not according to the optical intensity of the light to be detected L at one or more wavelengths among 1.38 μm, 1.45 μm, 1.87 μm, 1.94 μm, and 2.0 μm which are wavelengths easily absorbable by water, and 1.5 μm and 1.98 μm which are wavelengths easily absorbable by ice. This makes it possible to accurately grasp road surface conditions such as wetting and freezing, for example.

Preferably, the image pickup section 5 has a light-receiving device including an InP semiconductor layer and an InGaAs semiconductor layer. This makes it possible to favorably detect the light to be detected L2 having a wavelength band extending to a long wavelength of 2.6 μm, thereby enabling favorable imaging over a wide band. According to the detection wavelength, the light-receiving device may select any of Si, PbSe, InAs, PbS, and HgCdTe as a photosensitive layer on a given substrate as shown in the area (b) of Fig. 2.

The infrared imaging system 1 according to the present invention explained in the foregoing can be modified in various ways without being restricted to the above-mentioned embodiment. Though the above-mentioned embodiment explains an infrared imaging system to be mounted to a vehicle, for example, the infrared imaging system according to the present invention can also be used in various purposes such as nighttime security monitoring systems, for instance. Though the above-mentioned embodiment exemplifies water and ice as substances to be detected, the infrared imaging system according to the present invention can take various substances having an absorption wavelength band in the near-infrared region as substances to be detected.

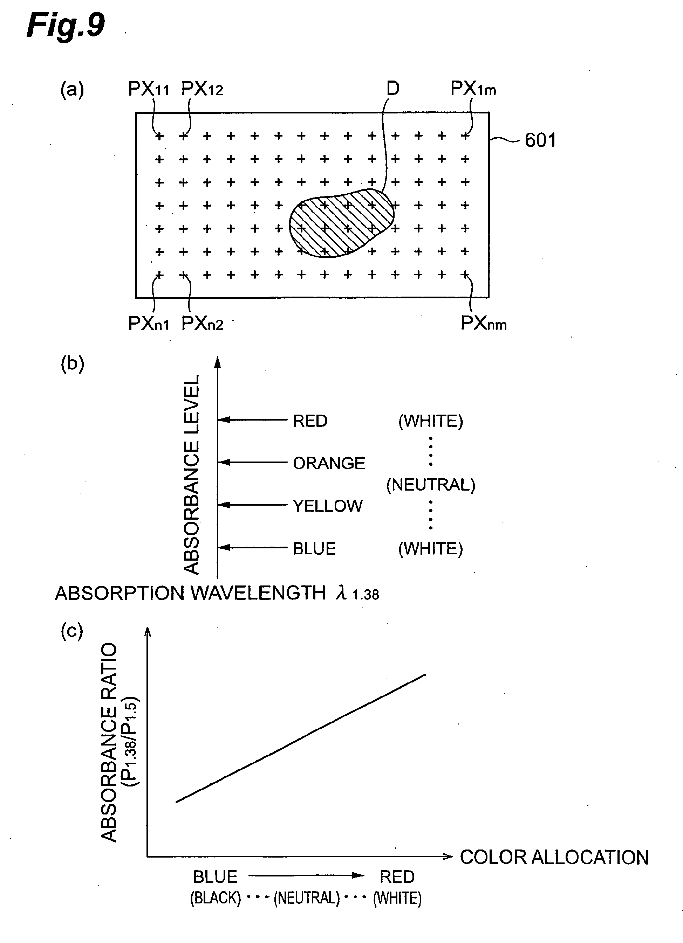

In particular, the infrared imaging system 1 according to the present invention may have a structure for turning the image data based on information about the light to be detected into a color image. Fig. 9 is a diagram for explaining color imaging in the infrared imaging system 1.

The color imaging is performed in the processing section 6, for example, and enables clearer visualization of the illuminated area by allocating colors in the visible light band to pixels PX$_{11}$, ..., PX$_{nm}$ constituting the image data 601 (illumination image) as shown in the area (a) of Fig. 9.

For example, the processing section 6 allocates different colors (see the area (b) of Fig. 9) in the visible light region to pixels PX$_{11}$, ..., PX$_{nm}$ (see the area (a) of Fig. 9) constituting the image data corresponding to illumination locations within the illumination area according to the respective absorbances of the illumination locations with respect to the absorption wavelength band of 1.38 μm specific to water. The colors in the visible light region to be allocated may be red, yellow, blue, and the like or those expressed by density levels in a monochromatic image. Then, the monitor 7 displays the image data with the colors allocated by the processing section 6 to the pixels PX$_{11}$, ..., PX$_{nm}$ constituting the image data, thereby enabling the visualization of the image data based on the information about the light to be detected.

The visualization of image data is also possible on the road surface where water and ice coexist. For example, the processing section 6 allocates different colors in the visible light region to pixels PX$_{11}$, ..., PX$_{nm}$ constituting the image data corresponding to illumination locations within the illumination area according to respective ratios between the absorbance with respect to a first absorption wavelength (the wavelength band of 1.38 μm yielding an absorbance peak of water) and the absorbance with respect to a second absorption wavelength (the wavelength band of 1.5 μm yielding an absorbance peak of ice) different from the first absorption wavelength in the same illumination locations (see the area (c) of Fig. 9). The colors in the visible light region to be allocated may also be red, yellow, blue, and the like or those expressed by density levels in a monochromatic image in this case. Then, the monitor 7 displays the image data with the colors allocated by the processing section 6 to the pixels PX$_{11}$, ..., PX$_{nm}$ constituting the image data, thereby making it possible to visualize the composition ratio between water and ice on the road surface in a simulated fashion. As a consequence, road surface conditions and the like can be grasped more clearly.

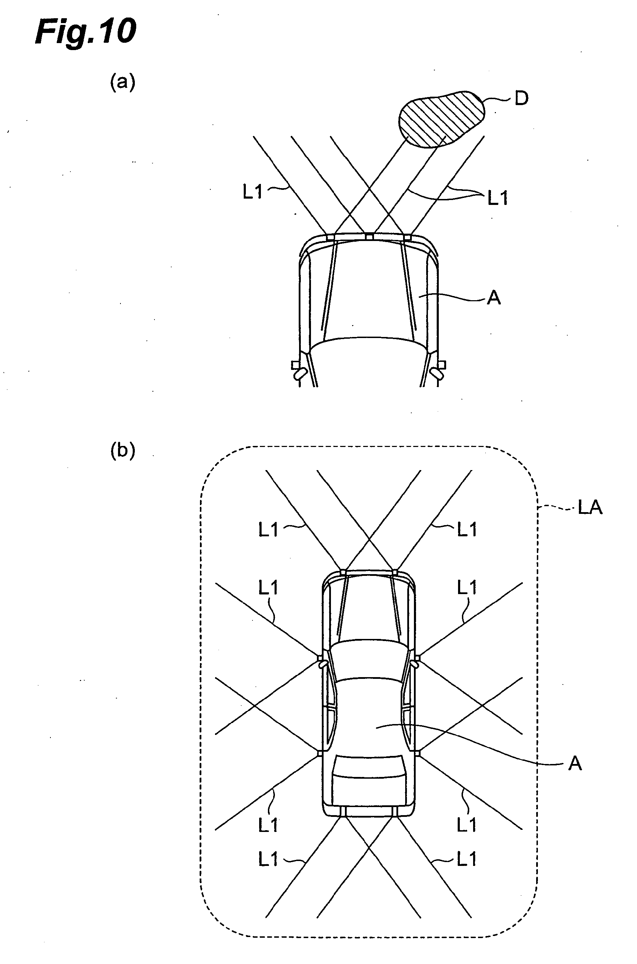

The infrared imaging system according to the present invention may comprise one or more imaging units having a structure such as the one mentioned above and realizing the SC light irradiating function and detecting function. Fig. 10 is a view for explaining another structure of the infrared imaging system according to the present invention.

When a plurality of imaging units (each having the structure of an infrared imaging system such as the one mentioned above) emitting SC light toward the traveling direction (front side) of the vehicle A are provided as shown in the area (a) of Fig. 10, for example, the road surface can be irradiated with the SC light uniformly in a wide area, whereby road surface conditions such as those including the frozen part D can be monitored over a wide area. Further, when imaging units each having a structure similar to that of the above-mentioned infrared imaging system are placed on the side faces and rear side of the vehicle A as shown in the area (b) of Fig. 10, road surface conditions and the like in the surroundings (illumination area LA) can be monitored at the same time. When a plurality of imaging units are prepared as mentioned above, the processing section 6, control section 8, monitor 7, and the like may be shared among the imaging units.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Industrial Applicability

The infrared imaging system according to the present invention can widely be employed in sensor systems such as night-vision imaging apparatus for vehicles and nighttime security monitoring systems.

## Claims

1. An infrared imaging system comprising:

a light source section for emitting supercontinuum light including a wavelength in a near-infrared region as irradiation light to be emitted to a predetermined illumination area, said light source section including a seed light source for emitting laser light and an optical fiber for generating the supercontinuum light in response to the input of the laser light;
an image pickup section for capturing light having arrived from the predetermined illumination area, said light including a reflected component of the irradiation light, as light to be detected, and generating image data in accordance with information about the captured light to be detected;
wavelength selecting means including at least one of first wavelength selecting means for selectively limiting a wavelength region of the irradiation light and second wavelength selecting means for selectively limiting a wavelength region of the light to be detected entering said image pickup section;
a display section for displaying the image data generated by said image pickup section; and
a processing section determining, in accordance with optical intensity information about the light to be detected in an absorption wavelength region of an object to be detected included in the image data, whether the object to be detected exists or not in the predetermined illumination region.

2. An infrared imaging system according to claim 1, wherein said optical fiber includes a highly nonlinear optical fiber.

3. An infrared imaging system according to claim 1 or 2, wherein a spectrum band of the supercontinuum light falls within the range of 0.8 $\mu$m to 3 $\mu$m.

4. An infrared imaging system according to any one of claims 1 to 3, wherein said infrared imaging system is mounted to a vehicle.

5. An infrared imaging system according to claim 4, further comprising a speed controller for controlling a moving speed of the vehicle in accordance with a result of determination in said processing section.

6. An infrared imaging system according to any one of claims 1 to 5, wherein said processing section determines whether the object to be detected exists or not in accordance with an optical intensity of at least one of light to be detected having a wavelength of 1.38 $\mu$m, light to be detected having a wavelength of 1.45 $\mu$m, light to be detected having a wavelength of 1.5 $\mu$m, light to be detected having a wavelength of 1.87 $\mu$m, light to be detected having a wavelength of 1.94 $\mu$m, light to be detected having a wavelength of 1.98 $\mu$m, and light to be detected having a wavelength of 2.0 $\mu$m.

7. An infrared imaging system according to any one of claims 1 to 6, further comprising an alarm generator for issuing an alarm, said alarm generator issuing the alarm when the existence of the object to be detected is proved in said processing section.

8. An infrared imaging system according to any one of claims 1 to 7, wherein said image pickup section includes a light-receiving device containing an InP semiconductor layer and an InGaAs semiconductor layer.

9. An infrared imaging system according to any one of claims 1 to 8, wherein said wavelength selecting means includes at least one of a photonic crystal filter and a tunable filter.

10. An infrared imaging system according to any one of claims 1 to 9, wherein said processing section allocates different colors in a visible light region to pixels constituting the image data corresponding to illumination locations within the illumination area in accordance with respective absorbances of the illumination locations with respect to an absorption wavelength peculiar to the object to be detected; and wherein said display section displays the image data in the colors allocated by said processing section to the pixels constituting the image data.

11. An infrared imaging system according to any one of claims 1 to 9, wherein said processing section allocates different colors in a visible light region to pixels constituting the image data corresponding to illumination locations within the illumination area according to respective ratios between the absorbance with respect to a first absorption wavelength and the absorbance with respect to a second absorption wavelength different from the first absorption wavelength in the same illumination locations, and wherein said display section displays the image data in the colors allocated by said processing section to the pixels constituting the image data.

**12.** An infrared imaging system according to any one of claims 1 to 11, wherein, for improving an SN ratio of the image data generated by said image pickup section, said processing section produces correction image data having reduced a noise component from the generated image data.

**13.** An infrared imaging system according to any one of claims 1 to 11, wherein said processing section newly generates an image to be used in analysis by averaging a plurality of image data items successively captured as time passes for each pixel corresponding thereto.

**14.** An infrared imaging system comprising one or more imaging units each having a structure identical to an infrared imaging system according to any one of claims 1 to 13.

EP 1 976 296 A1

*Fig.1*

# *Fig.2*

(a)

(b)

EP 1 976 296 A1

# *Fig.3*

(a)

(b)

(c)

# *Fig.4*

(a)

601
ILLUMINATION IMAGE

602 — NONILLUMINATED IMAGE

603 — SC LIGHT IMAGE

604 — LIGHT-SHIELDED IMAGE

90

605
IMAGE TO BE USED IN ANALYSIS

(b)

STORE

601
ILLUMINATION IMAGE

$t_1$ ILLUMINATION IMAGE

$t_2$

$t_i$

$t_{i+1}$

$t_n$

90

DELETE

AVERAGING

606
IMAGE TO BE USED IN ANALYSIS

**Fig.5**

# Fig.6

# Fig.7

2c

EP 1 976 296 A1

Fig.8

## Fig.9

(a)

PX₁₁ PX₁₂          D          PX₁ₘ

601

PXₙ₁ PXₙ₂                PXₙₘ

(b)

ABSORBANCE LEVEL

RED      (WHITE)

ORANGE      (NEUTRAL)

YELLOW

BLUE      (WHITE)

ABSORPTION WAVELENGTH $\lambda$ 1.38

(c)

ABSORBANCE RATIO ($P_{1.38}/P_{1.5}$)

COLOR ALLOCATION

BLUE ⟶ RED
(BLACK) ⋯ (NEUTRAL) ⋯ (WHITE)

# Fig.10

(a)

(b)

**INTERNATIONAL SEARCH REPORT**

| International application No. |
| --- |
| PCT/JP2007/050788 |

A. CLASSIFICATION OF SUBJECT MATTER
*H04N7/18*(2006.01)i, *B60R1/00*(2006.01)i, *G08G1/16*(2006.01)i, *H04N5/225*
(2006.01)i

According to International Patent Classification (IPC) or to both national classification and IPC

B. FIELDS SEARCHED

Minimum documentation searched (classification system followed by classification symbols)
H04N7/18, B60R1/00, G08G1/16, H04N5/225

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho     1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2001-216592 A  (Mitsubishi Cable Industries, Ltd.),<br>10 August, 2001 (10.08.01),<br>Full text; all drawings<br>(Family: none) | 1-9,12-14<br>10,11 |
| Y<br>A | JP 2004-276767 A  (Nissan Motor Co., Ltd.),<br>07 October, 2004 (07.10.04),<br>Full text; all drawings<br>(Family: none) | 1-9,12-14<br>10,11 |
| Y<br>A | nikkei BPnet, "Todai Sentanken to santec, Ko Taiiki de Ko Shutsuryoku no Kogen o Seihinka", [online], 10 May, 2004 (10.05.04), [retrieval date 05 April, 2007 (05.04.07)], Internet<URL:http://www.nikkeibp.co.jp/archives/306/306417.html> | 1-9,12-14<br>10,11 |

|   | Further documents are listed in the continuation of Box C. |   | See patent family annex. |
| --- | --- | --- | --- |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>05 April, 2007 (05.04.07) | Date of mailing of the international search report<br>17 April, 2007 (17.04.07) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**EP 1 976 296 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002274258 A
- JP 2003257367 A